# EUROPÄISCHE PATENTSCHRIFT

(11) **EP 3 969 916 B1**
(45) Veröffentlichungstag und Bekanntmachung des Hinweises auf die Patenterteilung: **12.07.2023**
(21) Anmeldenummer: 20722514.5
(22) Anmeldetag: 23.04.2020
(51) Int. Cl.: G01P 1/02, G01P 1/00

(54) **DREHZAHLSENSOR, FIXIEREINRICHTUNG FÜR EINEN DREHZAHLSENSOR, AUFNAHMEVORRICHTUNG FÜR EINEN DREHZAHLSENSOR, SENSORSYSTEM MIT EINER AUFNAHMEVORRICHTUNG UND EINEM DREHZAHLSENSOR UND VERFAHREN ZUM VERDREHSICHEREN POSITIONIEREN EINES DREHZAHLSENSORS**
ROTATIONAL SPEED SENSOR, FIXING DEVICE FOR A ROTATIONAL SPEED SENSOR, RECEIVING DEVICE FOR A ROTATIONAL SPEED SENSOR, SENSOR SYSTEM HAVING A RECEIVING DEVICE AND A ROTATIONAL SPEED SENSOR, AND METHOD FOR THE ROTATIONALLY LOCKED POSITIONING OF A ROTATIONAL SPEED SENSOR
CAPTEUR DE VITESSE DE ROTATION, DISPOSITIF DE FIXATION POUR UN CAPTEUR DE VITESSE DE ROTATION, DISPOSITIF RÉCEPTEUR POUR UN CAPTEUR DE VITESSE DE ROTATION, SYSTÈME DE DÉTECTION COMPORTANT UN DISPOSITIF RÉCEPTEUR ET UN CAPTEUR DE VITESSE DE ROTATION, ET PROCÉDÉ DE POSITIONNEMENT ANTI-ROTATION D'UN CAPTEUR DE VITESSE DE ROTATION

(30) Priorität: 15.05.2019 DE 102019112664
(43) Veröffentlichungstag der Anmeldung: 23.03.2022
(73) Patentinhaber: KNORR-BREMSE Systeme für Nutzfahrzeuge GmbH, 80809 München (DE)
(72) Erfinder: KLUFTINGER, Andre, 63924 Kleinheubach (DE)
(86) Internationale Anmeldenummer: PCT/EP2020/061288
(87) Internationale Veröffentlichungsnummer: WO 2020/229126

(56) Entgegenhaltungen:
- EP-A2- 1 284 424
- DE-A1-102010 049 552
- DE-A1-102017 113 604
- US-A1- 2007 163 337
- US-B1- 6 254 276

## Beschreibung

Der vorliegende Ansatz bezieht sich auf ein Sensorsystem mit einer Aufnahmevorrichtung und einem Drehzahlsensor und ein Verfahren zum verdrehsicheren Positionieren eines Drehzahlsensors.

Die DE 10 2008 054 000 B4 beschreibt eine Vorrichtung zur Selbstjustage und ein Verfahren zur Anordnung eines Impulsdrehzahlgebers in Bezug auf einen Rotor. Dabei wird zur positionsrichtigen Installation entweder am Sensor oder an einer Klemmhülse eine Kontur eingebracht, die die positionsrichtige Installation zulässt.

Die US 6,254,276 B1 beschreibt eine Wälzlagereinheit mit einem Drehgeschwindigkeitssensor. Die EP 1 284 424 A2 beschreibt einen Sensorbefestigungsaufbau. Die US 2007/0163337 A1 beschreibt eine Sensoranordnung und ein Verfahren zur Montage eines Sensor-Moduls in einem Getriebe. Die DE 10 2010 049 552 A1 beschreibt einen Wälzlagersensor, ein Wälzlager mit einem Wälzlagersensor und eine Anordnung eines Wälzlagersensors. Die DE 10 2017 113 604 A1 beschreibt eine Anordnung eines Drehimpulsgebers und eine Klemmhülse zur Erfassung einer Drehzahl eines Rotors.

Vor diesem Hintergrund ist es die Aufgabe des vorliegenden Ansatzes ein verbessertes Sensorsystem mit einer Aufnahmevorrichtung und einem Drehzahlsensor und ein verbessertes Verfahren zum verdrehsicheren Positionieren eines Drehzahlsensors zu schaffen.

Diese Aufgabe wird durch ein Sensorsystem und letztlich durch ein Verfahren gemäß den Hauptansprüchen gelöst.

Die mit dem vorgestellten Ansatz erreichbaren Vorteile bestehen darin, dass auf einfache Weise eine stabile verdrehsichere Positionierung eines Drehzahlsensors ermöglicht wird, bei der optional eine axiale Bewegung des Drehzahlsensors zugelassen wird. Die Bewegung kann weiterhin durch eine Klemmhülse realisiert werden, welche zusammen mit dem Drehzahlsensor eingebaut wird.

Ein Drehzahlsensor weist einen zylindrischen Sensorkopf mit einer Messspitze und eine Zunge auf. Die Zunge ist an einem Außendurchmesser des Sensorkopfs angeordnet und dazu ausgeformt, um als Verdrehsicherung für den Drehzahlsensor mit einer Gegenkontur einer Fixiereinrichtung zusammenwirken.

Der Drehzahlsensor kann ein aktiver Drehzahlsensor sein, der beispielsweise auch als Impulsdrehzahlgeber bezeichnet werden kann. Der Sensorkopf des Drehzahlsensors kann mit der Messspitze und der Zunge einstückig ausgeformt sein. Der Sensorkopf kann aber auch ein erstes Bauteil in Form eines zylinderförmigen Grundkörpers und ein zweites Bauteil aufweisen, welches die Messspitze aufweist, wobei das erste Bauteil und das zweite Bauteil miteinander gekoppelt sind. Die Zunge kann einstückig mit dem ersten Bauteil oder dem zweiten Bauteil ausgeformt sein. Alternativ kann die Zunge als separates Element mit dem ersten Bauteil oder dem zweiten Bauteil verbunden sein. Beispielsweise kann die Messspitze ein freies Ende des Drehzahlsensors ausformen. Die Messspitze kann ausgebildet sein, um eine Drehzahl beispielsweise eines Rotors oder Polrads zu sensieren. Hierfür kann die Messspitze zumindest einen Hall-Sensor aufweisen, welcher über ein Mess- und Versorgungskabel zum Bereitstellen einer Versorgungsspannung verbunden sein kann. Ein hier vorgestellter Drehzahlsensor ist mittels der Zunge rotationssicher an der Fixiereinrichtung koppelbar, die als ein feststehendes Maschinenteil verstanden werden kann. Die Fixiereinrichtung kann zumindest ein Fixierelement aufweisen. Hierbei kann ein axiales Verschieben des Drehzahlsensors, beispielsweise bezüglich des Rotors oder Polrads, dennoch ermöglicht sein. Der hier vorgestellte Drehzahlsensor ermöglicht somit dank einer geringfügigen speziellen Ausformung in Form der Zunge formschlüssig einen lagerichtigen Einbau, wobei der Drehzahlsensor dennoch auf einer Achse verschiebbar sein kann. Die direkt an dem Sensorkopf angeordnete Zunge ermöglicht dabei eine besonders stabile formschlüssige Rotationssicherung. Somit kann die Zunge auch an eine z.B. direkt an der Achse ausgeformte plane Fläche anliegen und den Sensor rotationssicher fixieren. Dies birgt den Vorteil, dass sowohl ein herkömmlicher, als auch ein rotationsgesicherter Sensor in der gleichen Aufnahme fixiert werden kann.

Die Zunge kann sich radial von dem Sensorkopf weg erstrecken. Die Zunge kann sich beispielsweise radial von einem zylindrischen Abschnitt des zweiten Bauteils weg erstrecken. Eine Ausformung der Zunge kann rechteckig sein. Dies ermöglicht eine stabile formschlüssige rotationssichere Fixierung des Sensorkopfs. Seitenflächen der Zunge können eben ausgeformt sein. Die Zunge kann ohne einen Fortsatz oder Überstand in Längsrichtung des Sensorkopfs ausgeformt sein. Um eine Drehung des Drehzahlsensors zu verhindern ,kann die Zunge an der Gegenkontur anliegen. Eine Endfläche (205) der Zunge (115) formt eine plane Anschlagfläche für die Gegenkontur (300) aus, wobei die Endfläche (205) ein äußerstes freies Ende der Zunge (115) ausformt und quer zu Seitenflächen (200) der Zunge (115) verlaufend angeordnet ist und diese verbindet, wobei die plane Anschlagfläche als einzige Fläche zur Verdrehsicherung dient. Dadurch kann eine sehr stabile Verdrehsicherung geschaffen werden.

Gemäß einem Beispiel, das nicht unter die Erfindung fällt, können zwei Seitenflächen der Zunge Anschlagflächen für die Gegenkontur ausformen. Die Seitenflächen können zwei gegenüberliegend angeordnete und zusätzlich oder alternativ parallel verlaufende Seitenflächen der Zunge sein. Die zwei Seitenflächen können quer zu der Längsachse des Sensorkopfes einander gegenüberliegend angeordnet sein. So kann ein Bewegen der Zunge über die zwei Seitenflächen verhindert werden, wodurch eine Rotation des Drehzahlsensors blockiert wird.

Die Zunge kann an einem der Messspitze abgewanten Ende des Sensorkopfs angeordnet sein. Dies schafft eine Möglichkeit, die Verdrehsicherung im während der Installation leicht zu realisieren.

Außerhalb des Erfindungsgegenstandes, aber von Vorteil kann es sein, wenn eine Endfläche der Zunge eine Zungennut als Anschlagfläche für die Gegenkontur aufweist. Die Endfläche formt ein äußerstes freies Ende der Zunge aus. Die Endfläche ist quer zu den Seitenflächen verlaufend angeordnet und verbindet diese. Die Zungennut kann halbkreisförmig in die Endfläche eingelassen sein. In einer solchen Zungennut kann für die Verdrehsicherung lediglich eine einfache Fixiereinrichtung mit nur einem einzigen Fixierelement wie ein Stift dienen, der in die Zungennut eingeführt wird, um ein seitliches Bewegen des Drehzahlsensors zu verhindern. Die Endfläche ist als eine plane Anschlagfläche ausgeformt, die als einzige Fläche zur Verdrehsicherung dient. Eine solche Form ist kostengünstig zu realisieren.

Die Fixiereinrichtung für einen der vorangehend vorgestellten Drehzahlsensoren weist die Gegenkontur auf, die mit der Zunge des Drehzahlsensors koppelbar ist, um den Drehzahlsensor verdrehsicher zu positionieren. Hierbei können die Gegenkontur und die Zunge formschlüssig miteinander koppelbar sein. Die Fixiereinrichtung kann ein feststehendes Maschinenteil repräsentieren oder starr an einem feststehenden Maschinenteil fixierbar sein. Um die Fixiereinrichtung an einem feststehenden Maschinenteil zu fixieren, kann die Fixiereinrichtung zumindest ein Fixierelement in Form einer Schraube, eines Stabs, eines Bolzens, eines Lagerkörpers und zusätzlich oder alternativ einer Lasche aufweisen oder mit zumindest einem solchen Fixierelement gekoppelt sein. Die Fixiereinrichtung kann auch direkt an die Aufnahme angeformt sein.

Die Gegenkontur weist eine flache Fläche auf, an der die Zunge verdrehsicher anliegt. Alternativ und außerhalb des Erfindungsgegenstandes kann die Aufnahmenut zur Aufnahme der Zunge oder einen Vorsprung zum Eingreifen in eine Zungennut der Zunge oder zumindest einen Fortsatz als Gegenanschlagfläche für die Zunge ausformen. Die Aufnahmenut kann beispielsweise einen rechteckigigen Querschnitt zur Aufnahme einer im Wesentlichen rechteckigen Zunge aufweisen. Die Aufnahmenut kann beispielsweise in einem als Lagerkörper ausgeformten Fixierelement angeformt sein. Der Vorsprung kann beispielsweise eine gewölbte oder eckige Außenfläche eines stabförmigen Fixierelements sein, wobei der Stab in die Zungennut einführbar ist. Die Gegenkontur kann auch zwei der Fortsätze umfassen, welche auf zwei Seiten als zwei Gegenanschlagflächen für zwei Seitenflächen der Zunge dienen können. Die Zunge kann beispielsweise zwischen den beiden Fortsätzen anordenbar sein, um ein seitliches Bewegen der Zunge durch die zwei Fortsätze formschlüssig zu verhindern. Einer der Fortsätze oder beide Fortsätze können stabförmig ausgeformt sein.

Eine Aufnahmevorrichtung für einen der vorangehend vorgestellten Drehzahlsensoren weist einen Aufnahmekörper zum Aufnehmen zumindest eines Abschnitts des Sensorkopfs und eine der vorangehend vorgestellten Fixiereinrichtungen gemäß Anspruch 1 auf. Der Aufnahmekörper kann klassich eine Bohrung in der Achse zur Aufnahme des Sensors sein. Oder der Aufnahmekörper kann in einer weiteren Ausführung auch hohlzylinderförmig, beispielsweise rohrförmig ausgeformt sein. Der Aufnahmekörper kann dazu ausgeformt sein, um an einem Fahrzeug, beispielsweise einem Truck oder Trailer, montiert zu werden. Beispielsweise kann eine Außenfläche des Aufnahmekörpers eine oder mehrere Anschweißlaschen aufweisen. Eine solche Aufnahmevorrichtung schafft eine stabile und geschützte Aufnahmemöglichkeit zum rotationssicheren Lagern des Drehzahlsensors.

Der Aufnahmekörper der Aufnahmevorrichtung und die Fixiereinrichtung können einstückig ausgeformt sein oder die Fixiereinrichtung kann formschlüssig, kraftschlüssig und zusätzlich oder alternativ stoffschlüssig mit dem Aufnahmekörper verbunden sein. Die Fixiereinrichtung kann hierbei beispielsweise an den Aufnahmekörper geschraubt, geklemmt, geklebt, angegossen oder geschweißt sein.

Ein Sensorsystem weist eine der vorangehend vorgestellten Aufnahmevorrichtungen und einen der vorangehend vorgestellten Drehzahlsensoren auf, wobei die Zunge des Drehzahlsensors mit der Gegenkontur verdrehsicher gekoppelt oder koppelbar ist. Beispielsweise kann die Zunge in einer in dem Aufnahmekörper aufgenommenen Aufnahmestellung des Drehzahlsensors verdrehsicher mit der Gegenkontur gekoppelt sein. Dabei können die Drehung verhinderende plane Anschlagflächen der Zunge und der Gegenkontur spielfrei aneinanderliegen. Dabei kann der Drehzahlsensor in der Aufnahmestellung entlang einer Achse des Aufnahmekörpers in dem Aufnahmekörper linear beweglich sein. Das erfindungsgemäße Sensorsystem weist den Vorteil auf, dass damit sowohl klassische passive (nicht verdrehgesichete), als auch aktive (verdrehgesichterte) Drehzahlsensoren in der gleichen Vorrichtung verbaut werden können.

Ein Verfahren zum verdrehsicheren Positionieren eines der vorangehend vorgestellten Drehzahlsensoren mit einem Sensorsystem gemäß Anspruch 1 weist einen Schritt des Anordnens auf. Im Schritt des Anordnens wird die Zunge des Drehzahlsensors in oder an eine Gegenkontur einer Fixiereinrichtung angeordnet, wobei eine Endfläche der Zunge eine plane Anschlagfläche für die Gegenkontur ausformt, wobei die Zunge im Schritt des Anordnens derart angeordnet wird, dass sie mit der Gegenkontur zusammenwirkt, um den Drehzahlsensor (100) verdrehsicher zu positionieren, wobei die plane Anschlagfläche als einzige Fläche zur Verdrehsicherung dient.

Beispiele zum hier vorgestellten Ansatz werden in der nachfolgenden Beschreibung mit Bezug zu den Figuren näher erläutert. Es zeigen:
Fig. 1 eine seitliche Querschnittdarstellung eines Drehzahlsensors gemäß einem Ausführungsbeispiel;
Fig. 2 eine rückseitige Querschnittdarstellung eines Drehzahlsensors. Die Darstellung fällt nicht unter den Gegenstand der Ansprüche;
Fig. 3a und Fig. 3b je eine rückseitige Querschnittdarstellung eines Drehzahlsensors. Die Darstellung gemäß Fig. 3a fällt nicht unter den Gegenstand der Ansprüche. Die Darstellung gemäß Fig. 3b entspricht einem Ausführungsbeispiel der Erfindung;
Fig. 4 bis 5 je eine rückseitige Querschnittdarstellung eines Drehzahlsensors und einer Fixiereinrichtung. Die Darstellung fällt nicht unter den Gegenstand der Ansprüche;
Fig. 6 eine seitliche Querschnittdarstellung eines Drehzahlsensors mit einer Fixiereinrichtung. Die Darstellung fällt nicht unter den Gegenstand der Ansprüche;
Fig. 7 eine seitliche Querschnittdarstellung eines Sensorsystems mit einer Aufnahmevorrichtung mit einer Fixiereinrichtung und einem Drehzahlsensor. Die Darstellung fällt nicht unter den Gegenstand der Ansprüche;
Fig. 8 eine seitliche Querschnittdarstellung einer Aufnahmevorrichtung;
Fig. 9 eine frontale Querschnittdarstellung einer Aufnahmevorrichtung (Schnitt B-B von Figur 8);
Fig. 10 und 11 je eine seitliche Querschnittdarstellung eines Sensorsystems;
Fig. 12 eine seitliche Querschnittdarstellung einer Aufnahmevorrichtung;
Fig. 13 ein Ablaufdiagramm eines Verfahrens zum verdrehsicheren Positionieren eines Drehzahlsensors an einer Fixiereinrichtung gemäß einem Ausführungsbeispiel.

In der nachfolgenden Beschreibung günstiger Beispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird. Die Erfindung ist so, wie sie in den Ansprüchen definiert ist. Hier genannte Beispiele, die nicht unter den Gegenstand der Ansprüche fallen, sind keine Ausführungsbeispiele der Erfindung.

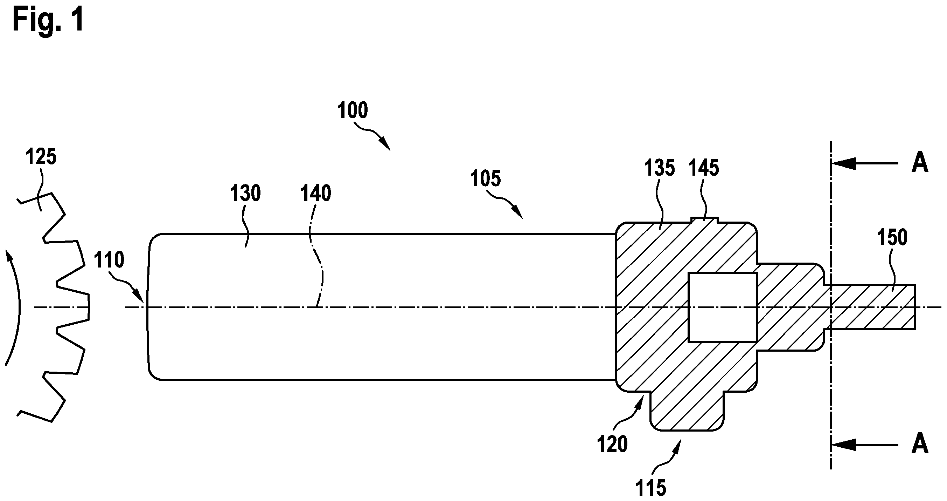

**Fig. 1** zeigt eine seitliche Darstellung eines Drehzahlsensors 100 gemäß einem Ausführungsbeispiel.

Der Drehzahlsensor 100 weist einen zylindrischen Sensorkopf 105 mit einer Messspitze 110 und eine Zunge 115 auf. Die Zunge 115 ist an einem Außendurchmesser 120 des Sensorkopfs 105 angeordnet und dazu ausgeformt, um als Verdrehsicherung für den Drehzahlsensor 100 mit einer Gegenkontur einer Fixiereinrichtung zusammenzuwirken, beispielsweise in oder an eine solche Gegenkontur zu greifen. Erfindungsgemäß formt eine Endfläche (205) der Zunge (115) eine plane Anschlagfläche für die Gegenkontur (300) aus, wobei die Endfläche (205) ein äußerstes freies Ende der Zunge (115) ausformt und quer zu Seitenflächen (200) der Zunge (115) verlaufend angeordnet ist und diese verbindet, wobei die plane Anschlagfläche als einzige Fläche zur Verdrehsicherung dient.

Der Drehzahlsensor 100 ist beispielsweise dazu ausgebildet, um eine Drehzahl eines Rotors 125 oder Polrads zu sensieren. Hierzu ist die Messspitze 110, welche ein freies Ende des Drehzahlsensors 100 ausformt, gemäß diesem Ausführungsbeispiel dem Rotor 125 zugewandt angeordnet. Der Drehzahlsensor 100 ist gemäß diesem Ausführungsbeispiel als ein aktiver Drehzahlsensor 100 ausgeformt. Der Drehzahlsensor 100 weist gemäß diesem Ausführungsbeispiel ein erstes Bauteil 130 auf, das einen zylindrischen Grundkörper des Sensorkopfs 105 ausformt. Der Rotor 125 ist gegenüberliegend zu dem Drehzahlsensor 100 und insbesondere gegenüberliegend zu der Messspitze 110 positioniert. Die Messspitze 110 ist an einem dem Rotor 125 zugewandten Ende des Drehzahlsensors 100, hier an dem dem Rotor 125 zugewandten Ende des ersten Bauteils 130 angeordnet. Ferner weist der Drehzahlsensor 100 ein zweites Bauteil 135 auf, das die Zunge 115 und einen Kabelabgang 150 ausformt. Das erste Bauteil 130 und das zweite Bauteil 135 sind gemäß diesem Ausführungsbeispiel verdrehsicher formschlüssig, kraftschlüssig und/oder stoffschlüssig axial miteinander verbunden. Gemäß einem alternativen Ausführungsbeispiel ist die Zunge 115 an dem ersten Bauteil 130 angeordnet oder der gesamte Drehzahlsensor 100 einstückig ausgeformt.

Die Zunge 115 erstreckt sich gemäß diesem Ausführungsbeispiel radial von dem Sensorkopf 105 weg. Hierbei erstreckt sich die Zunge 115 gemäß diesem Ausführungsbeispiel von einem fluchtend zu dem Grundkörper verlaufenden zylindrischen Abschnitt des zweiten Bauteils 135 und/oder senkrecht zu einer Zylindermittelachse 140 oder Längsachse des zylinderförmigen Sensorkopfs 105 weg. Die Zunge 115 ist gemäß diesem Ausführungsbeispiel an einem der Messspitze 110 abgewandten Ende des Sensorkopfs 105 angeordnet. Die Zunge 115 weist einen rechteckigen Querschnitt auf.

Auf einer der Zunge 115 abgewandten Seite des Außendurchmessers 120 weist der Sensorkopf 105 gemäß diesem Ausführungsbeispiel einen Richtungsindikator 145 auf, der dazu ausgeformt ist, um eine rotationsrichtige Ausrichtung des Sensors 100 zu ermöglichen. Der Richtungsindikator 145 ist beispielsweise als kleiner Überstand über den Außendurchmesser 120 ausgeformt oder in diesen eingelassen.

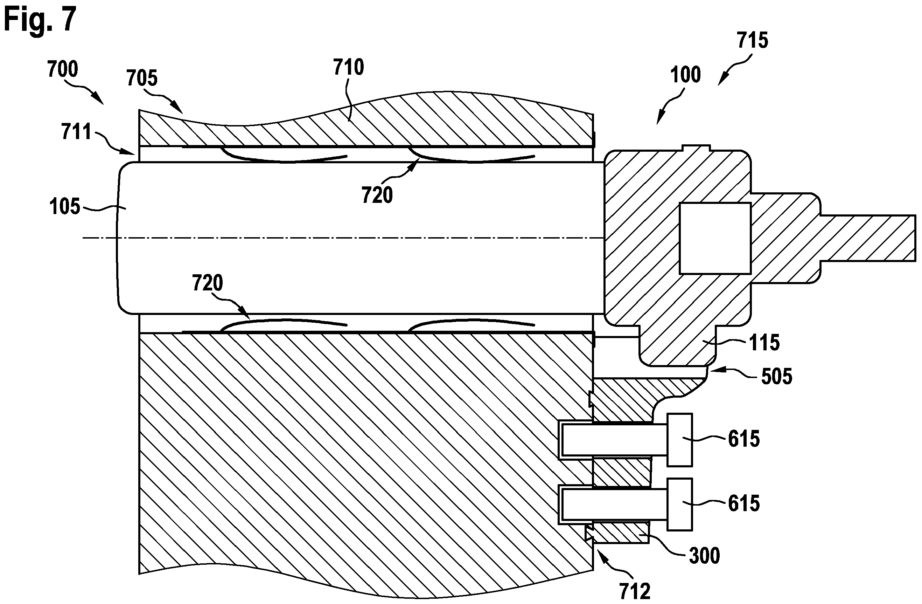

Der hier vorgestellte Drehzahlsensor 100 realisiert aufgrund der Zunge 115 ein Schnittstellenelement zur rotationssicheren Fixierung des aktiven Drehzahlsensors 100. Die Zunge 115 kann auch als ein "Element zur rotationsrichtigen Ausrichtung" bezeichnet werden. Bei dem aktiven Drehzahlsensor 100 ist ein lagerichtiger Einbau bezüglich des Rotors 125 nötig, wobei der Sensor 100 in einer Aufnahme entlang der Zylindermittelachse 140 verschiebbar ist, z.B. mittels einer Klemmhülse, siehe hierzu auch die Figuren 7 bis 12.

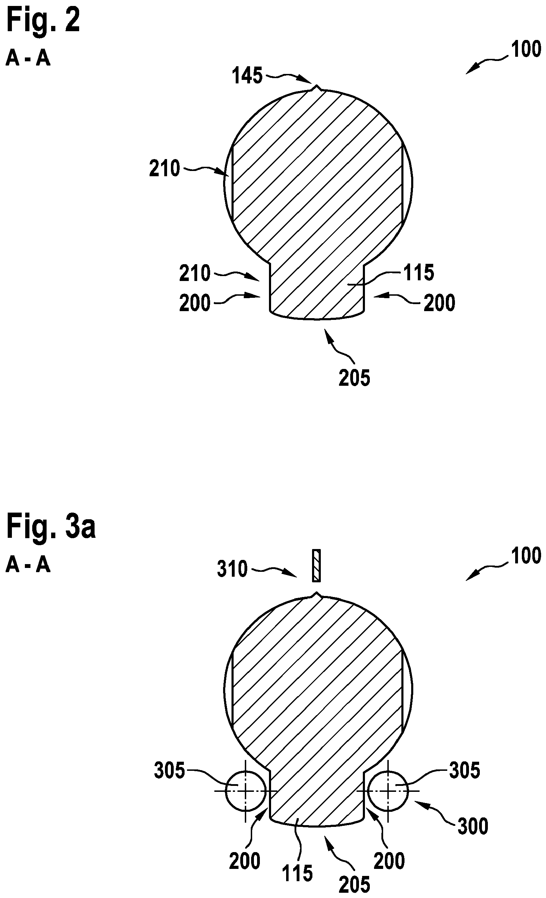

In Fig. 1 ist eine Schnittachse A-A dargestellt, auf die sich die Figuren 2 bis 5 beziehen.

**Fig. 2** zeigt eine frontale Querschnittdarstellung eines Drehzahlsensors 100. Dabei kann es sich um ein Beispiel des anhand von Fig. 1 beschriebenen Drehzahlsensors 100 handeln, welcher entlang der in Fig. 1 gezeigten Achse A-A geschnitten dargestellt ist. Der Drehzahlsensor 100 ist gegenüber dem in Fig. 1 dargestellten Drehzahlsensor 100 um 90° zum Betrachter gedreht dargestellt.

Zu erkennen ist in Fig. 2, dass die Zunge 115 zwei Seitenflächen 200 aufweist, die sich gemäß diesem Beispiel parallel zueinander erstrecken. Eine Endfläche 205 der Zunge verbindet die Seitenflächen 200 miteinander und bildet ein äußerstes Ende der Zunge 115. Die Endfläche 205 ist gemäß diesem Beispiel konvex ausgeformt. Gemäß einem alternativen Ausführungsbeispiel ist die Endfläche 205 konkav oder senkrecht bezüglich der Seitenflächen 200 ausgerichtet. Dargestellt sind in Fig. 2 außerdem Schlüsselflächen 210.

Zwei weitere Seitenflächen der Zunge 115, die quer zu den Seitenflächen 200 augerichtet sind und diese miteinander verbinden, können optional verwendet werden, um eine Fixierung des Drehzahlsensors 100 entlang der Längsachse des Drehzahlsensors 100 zu bewirken.

**Fig. 3a** zeigt wiederum die Schnittebene A-A eines Drehzahlsensors 100 und einer Fixiereinrichtung 300. Dabei kann es sich um den in Fig. 2 beschriebenen Drehzahlsensor 100 handeln.

Die Fixiereinrichtung 300 ist dazu ausgeformt, um den Drehzahlsensor 100 verdrehsicher zu positionieren. Hierzu weist die Fixiereinrichtung 300 eine Gegenkontur auf, die mit der Zunge des Drehzahlsensors 100 koppelbar ist. Gemäß diesem Beispiel formt die Gegenkontur zumindest eine Gegenanschlagfläche für die Zunge 115 aus. Gemäß diesem Beispiel umfasst die Fixiereinrichtung 300 zwei Fixierelemente 305, welche je eine Gegenanschlagfläche für die Zunge 115 ausformen. Die Fixierelemente 305 sind stabförmig ausgeformt und/oder erstrecken sich quer zu einer Erstreckungsrichtung der Zunge 115 und/oder sind benachbart zu je einer der Seitenflächen 200 oder Endflächen 205 der Zunge 115 angeordnet. Lediglich beispielhaft sind die stabförmigen Fixierelemente 305 gemäß diesem Beispiel zylinderförmig ausgeformt. Die Zunge 115 ist gemäß diesem Beispiel also zwischen den zwei Fixierelementen 305 angeordnet. Die Seitenflächen 200 der Zunge 115 formen hierbei Anschlagflächen für die Gegenkonturen aus. Alternativ können die Fixierelemente 305 eine andere geeignete Form aufweisen.

Die Fixiereinrichtung 300 kann auch als "Fixierelement zur rotationsrichtigen Ausrichtung eines Sensors" bezeichnet werden. Gemäß einem alternativen Beispiel ist die Fixiereinrichtung 300 oder zumindest eines der oder beide Fixierelemente 305 als ein Schraubenanschlag, ein Bolzen oder eine Lasche ausgeformt oder direkt ein Teil der Aufnahmevorrichtung für den Sensor.

Ein weiterer Richtungsindikator 310 ist gemäß diesem Beispiel an einer Einbauvorrichtung zum Einbauen des Drehzahlsensors 100 in eine Aufnahmevorrichtung zum Lagern des Drehzahlsensors 100 angeordnet, wobei der weitere Richtungsindikator 310 ein Ausrichten des Drehzahlsensors 100 ermöglicht. Die Aufnahmevorrichtung ist in den Figuren 7 bis 12 genauer beschrieben.

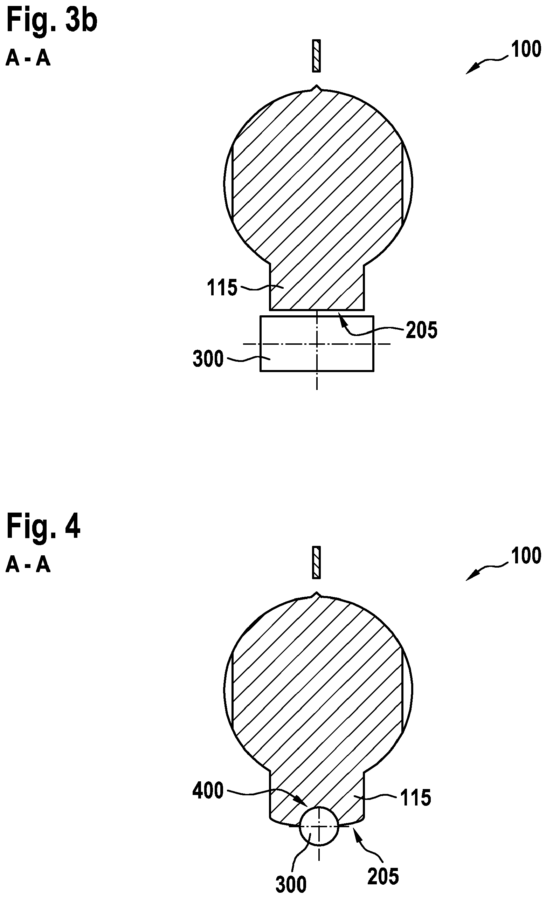

**Fig. 3b** zeigt wiederum die Schnittebene A-A eines Drehzahlsensors 100 und einer Fixiereinrichtung 300 gemäß einem Ausführungsbeispiel. Dabei kann es sich um den in Fig. 2 beschriebenen Drehzahlsensor 100 handeln.

Hierbei ist die Zungenendfläche 205, wie anhand von Fig. 1 beschrieben, lotrecht ausgeformt und erstreckt sich parallel zu einer Anschlagfläche der Fixiereinrichtung 300, welche als Gegenkontur zur verdrehsicheren Fixierung dient. In diesem Beispiel dient nur eine einzige Fläche zur Verdrehsicherung. Je größer die Anschlagfläche 205 mit Gegenkontur ausgeformt wird, desto geringer ist folglich der resultierende Winkelfehler der durch die Fixierung erlaubt wird.

**Fig. 4** zeigt eine Querschnittdarstellung A-A aus Fig, 1 eines Drehzahlsensors 100 und einer Fixiereinrichtung 300. Dabei kann es sich um den in Fig. 2 oder 3 beschriebenen Drehzahlsensor 100 handeln, mit dem Unterschied, dass die Endfläche 205 der Zunge 115 eine Zungennut 400 aufweist. Die Fixiereinrichtung 300 kann lediglich eines der in Fig. 3 beschriebenen Fixierelemente umfassen, das gemäß diesem Beispiel teilweise in der Zungennut 400 aufgenommen ist. Das Fixierelement formt dabei als Gegenkontur für die Zunge 115 einen Vorsprung aus, der in die Zungennut 400 eingreift. Die Zungennut 400 ist gemäß diesem Beispiel mittig und/oder halbkreisförmig in der Endfläche 205 angeordnet. Die Zungennut 400 dient gemäß diesem Beispiel als Anschlagfläche für die Gegenkontur der Fixiereinrichtung 300.

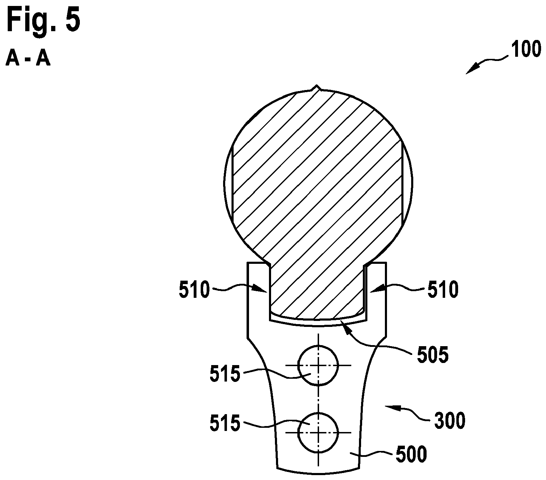

**Fig. 5** zeigt eine Querschnittdarstellung A-A aus Fig, 1 eines Drehzahlsensors 100 und einer Fixiereinrichtung 300. Dabei kann es sich um den in Fig. 2 beschriebenen Drehzahlsensor 100 handeln. Die Fixiereinrichtung 300 weist gemäß diesem Beispiel einen Lagerkörper 500 mit einer Gegenkontur in Form einer Aufnahmenut 505 auf, die dazu ausgeformt ist, um die Zunge aufzunehmen. Zwei einander zugewandte Nutinnenflächen 510 der Aufnahmenut 505 formen gemäß diesem Beispiel je eine Gegenanschlagfläche für die Seitenflächen der in der Aufnahmenut 505 angeordnete Zunge aus.

Der Lagerkörper 500 weist gemäß diesem Beispiel eine oder zwei Durchgangslöcher, hier beispielsweise Bohrungen 515, zur Aufnahme zumindest einer Schraube oder eines Stabs auf. Die gemäß diesem Beispiel zwei Bohrungen 515 sind gemäß diesem Beispiel untereinander, also auf einer Verlängerung einer Tiefe der Aufnahmenut 505 hintereinander angeordnet. Die Bohrungen 515 erstrecken sich gemäß diesem Beispiel je quer zu der Tiefe der Aufnahmenut 505 und parallel zur Längsachse des Drehzahlsensors 100.

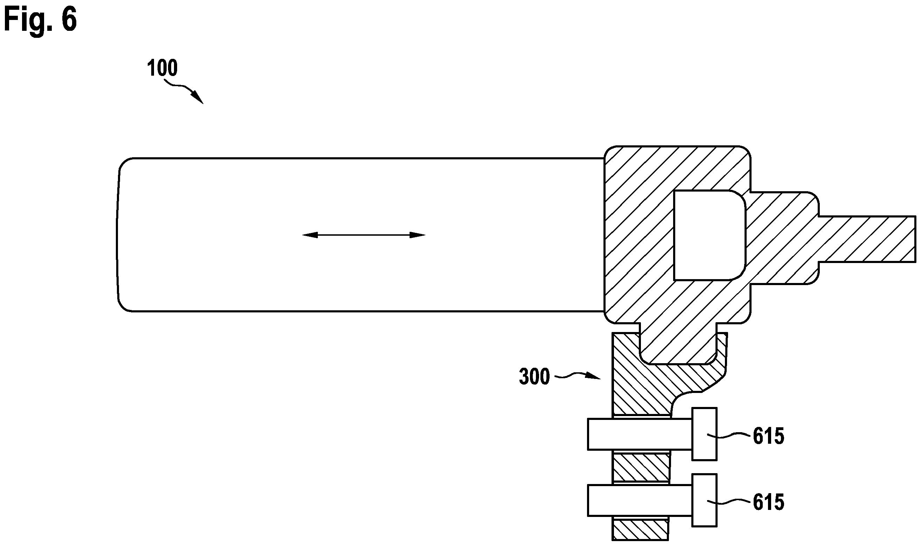

Gemäß einem Beispiel wird durch jede der Bohrungen 515 je ein Befestigungselement geführt, durch die die Fixiereinrichtung 300 beispielsweise an einem feststehenden Maschinenteil befestigt werden kann, wie es in Fig. 7 gezeigt ist. **Fig. 6** zeigt eine seitliche Querschnittdarstellung eines Drehzahlsensors 100 mit einer Fixiereinrichtung 300. Dabei kann es sich um den in Fig. 5 beschriebenen Drehzahlsensors 100 und die Fixiereinrichtung 300 handeln. Bei den durch die Bohrungen geführten Befestigungselementen 615 handelt es sich gemäß diesem Beispiel um zwei Schrauben. Auch wenn der Drehzahlsensor 100 in der Fixiereinrichtung 300 rotationssicher gelagert ist, so ist er doch in axialer Richtung, also entlang seiner Längsachse, verschiebbar.

**Fig. 7** zeigt eine seitliche Querschnittdarstellung eines Sensorsystems 700 mit einer Aufnahmevorrichtung 705 mit einer Fixiereinrichtung 300 und einem Drehzahlsensor 100. Bei der Fixiereinrichtung 300 kann es um die in Fig. 6 beschriebene Fixiereinrichtung 300 und bei dem Drehzahlsensor 100 um den in Fig. 6 beschriebenen Drehzahlsensor 100 handeln. Das Sensorsystem 700 weist die Aufnahmevorrichtung 705 und den Drehzahlsensor 100 auf. Die Aufnahmevorrichtung 705 wiederum weist einen Aufnahmekörper 710, der dazu ausgeformt ist, um zumindest einen Abschnitt des Sensorkopfs 105 aufzunehmen, und die Fixiereinrichtung 300 auf. Der Aufnahmekörper 710 weist gemäß diesem Beispiel eine zylindrische Aufnahmebohrung 711 auf, in der der zylinderförmige Grundkörper des Sensorkopfs 105 zumindest abschnittsweise mittels einer Klemmhülse 720 aufgenommen ist. Der Aufnahmekörper 710 und die Fixiereinrichtung 300 können formschlüssig, kraftschlüssig und/oder stoffschlüssig miteinander verbunden sein. Gemäß diesem Beispiel besteht eine formschlüssige und zusätzlich kraftschlüssige Verbindung. Hierzu sind die als Schrauben ausgeführten Befestigungselemente 615 der Fixiereinrichtung 300 durch die Bohrungen in der Fixiereinrichtung 300 in den Aufnahmekörper 710 geschraubt angeordnet. Zudem sind die Fixiereinrichtung 300 und der Aufnahmekörper 710 durch eine Rasteinrichtung 712 miteinander verrastet. Die Rasteinrichtung 712 umfasst dabei geeignete ineinandergreifende Konturen, die an einerander gegenüberliegenden Flächen der Fixiereinrichtung 300 und des Aufnahmekörpers 710 ausgeformt sind. Beispielsweise weist die Fixiereinrichtung 300 dazu einen oder mehrere Vorsprünge und der Aufnahmekörper 710 eine oder mehrere entsprechende Vertiefungen auf, oder umgekehrt.

In der zylindrischen Bohrung des Aufnahmekörpers 710 ist der Drehzahlsensor 100 parallel zu seiner Längsachse unter Zuhilfenahme der Klemmhülse 720 linear beweglich angeordnet. Die Klemmhülse 720 ist in einem umlaufenden Spalt zwischen dem Sensorkopf 105 und der Wand der Aufnahmebohrung 711 angeordnet. Die Klemmhülse 720 kann dabei ein oder mehrere Federlemente aufweisen, die sich an der umlaufenden Wand der Aufnahmebohrung 711 abstüzen und gegen den Sensorkopf 105 drücken können, um den Sensorkopf 105 in der Aufnahmebohrung 711 linear bewglich zu halten.

In einer hier gezeigten in dem Aufnahmekörper 710 aufgenommenen Aufnahmestellung 715 des Drehzahlsensors 100 ist die Zunge 115 und somit der gesamte Drehzahlsensor 100 verdrehsicher mit der durch die Aufnahmenut 505 ausgeformten Gegenkontur der Fixiereinrichtung 300 gekoppelt. Gemäß diesem Beispiel ist die Aufnahmenut 505 durchgängig über eine komplette Länge der Fixiereinrichtung 300 in Längsrichtung des Drehzahlsensor 100 ausgeformt. Auf diese Weise ist der Drehzahlsensor 100 in Längsrichtung frei beweglich.

Der hier als Drehzahlsensor 100 ausgeführte Sensor ist gemäß diesem Beispiel über die Fixiereinrichtung 300 in Form einer weiteren Komponente rotationsfixiert und einbaurichtig in den vorhandenen Aufnahmekörper 710 in Form einer Achse eingebaut, welche es weiterhin ermöglicht, den Drehzahlsensor 100 in axialer Richtung zu verschieben. Gemäß diesem Beispiel sind lediglich Bohrungen/Gewinde für die Fixiereinrichtung 300 in Form einer Fixierungsplatte an einer Außenwand des Aufnahmekörpers 710 parallel zu der Aufnahmebohrung 711 an dem Aufnahmekörper 710 angebracht. Gemäß einem alternatven Beispiel ist die Fixiereinrichtung 300 in Form einer Fixierungskontur direkt an dem Aufnahmekörper 710 angegossen. Somit wird keine weitere Fixierunskomponente wie beispielsweise eine oder mehrere Schrauben mehr benötigt.

Der Lagerkörper kann gemäß einem Beispiel ein Stanzbiegeteil sein. Zusätzlich oder alternativ zu den hier gezeigten Schrauben und/oder der Rasteinrichtung 712 weist die Fixiereinrichtung 300 gemäß einem alternativen Beispiel zumidest eine Nut-Feder-Verbindung und/oder Nut-NutVerbindung und/oder ein Niet auf.

Bei der Fixiereinrichtung 300 kann es sich gemäß einem altrnativen Beispiel um eine der anhand einer der Figuren 3 bis 5 beschriebenen Fixiereinrichtungen 300 handeln, welche einstückig oder formschlüssig, stoffschlüssig und/oder kraftschlüssig mit dem Aufnahmekörper 710 verbunden ist.

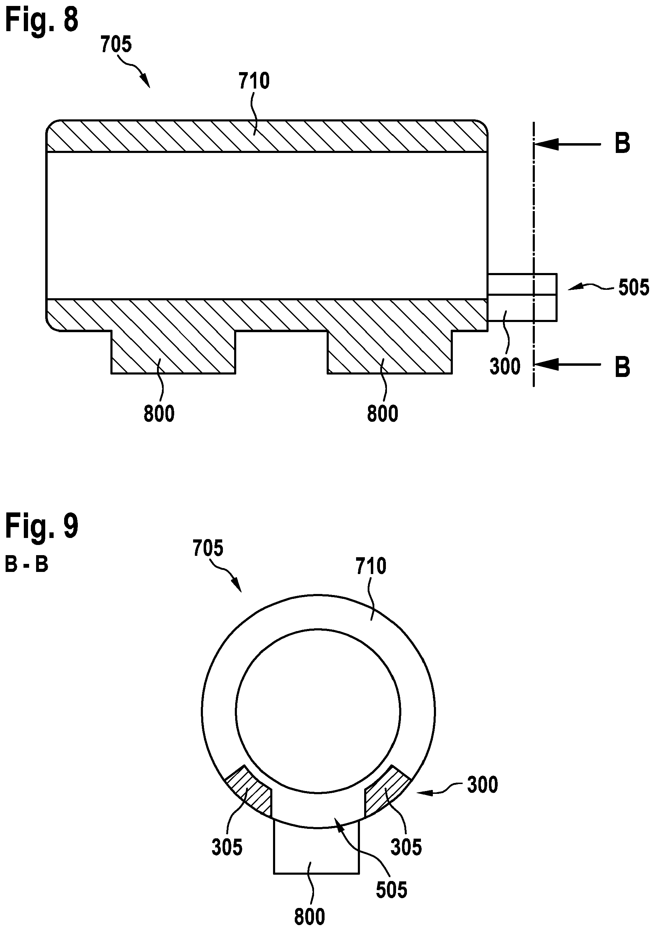

**Fig. 8** zeigt eine seitliche Querschnittdarstellung einer Aufnahmevorrichtung 705 gemäß einem Beispiel. Dabei kann es sich um die in Fig. 7 beschriebene Aufnahmevorrichtung 705 handeln, mit dem Unterschied, dass die Fixiereinrichtung 300 als Fortsatz der Aufnahmevorrichtung 705 ausgeformt ist. Die Fixiereinrichtung 300 formt wie anhand von Fig. 7 beschrieben eine Aufnahmenut 505 auf. Gemäß einem alternativen Beispiel wird die Fixiereinrichtung 300 durch zwei zwei beispielsweise stabförmige Fixierelemente 305 ausgeformt, wie es beispielsweise anhand von Fig. 3 beschrieben ist.

Der Aufnahmekörper 710 und die Fixiereinrichtung 300 sind gemäß diesem Beispiel einstückig ausgeformt. Ein Außendurchmesser des Aufnahmekörpers 710 weist gemäß diesem Beispiel eine oder mehrere Laschen 800 auf, die beispielsweise dazu ausgeformt sind, um die Aufnahmevorrichtung 705 an einem Truck oder Trailer zu montieren.

Gemäß diesem Beispiel ist die Fixiereinrichtung 300 in Form einer Rotationssicherung direkt an dem Aufnahmekörper 710 in Form eines Halters, wie er oft bei Trailern Verwendung findet, angebracht. Die Fixiereinrichtung 300 realisiert hierbei eine Erweiterung eines Aufnahmekörpers 710 in Form einer Einbauvorrichtung mit einem Fixierelement zum lagerichtigen Einbau des Sensors. Der Aufnahmekörper 710 ist gemäß diesem Beispiel als ein Rohr mit Anschweiß- oder Schraublaschen 800 als Sensoraufnahme z. B. an einem Trailer oder Truck ausgeformt. Gemäß einem alternativen Beispiel weist der Aufnahmekörper 710 eine Aussparung und/oder eine Klemmhülse zur Führung des Sensors direkt im Rohr auf. Als weiteres vorteilhaftes Beispiel umfasst die Aufnahmevorrichtung 705 eine Vorrichtung für ein Stanzbiegeteil zur Fixierung.

In Fig. 8 ist ferner eine Schnittachse B-B dargestellt.

**Fig. 9** zeigt eine frontale Querschnittdarstellung einer Aufnahmevorrichtung 705. Dabei kann es sich um ein Beispiel der anhand von Fig. 8 beschriebenen Aufnahmevorrichtung 705 handeln, welche entlang der in Fig. 8 gezeigten Schnittachse B-B geschnitten dargestellt ist. Der Schnitt verläuft somit durch die Fixiereinrichtung 300.

Die Aufnahmevorrichtung 705 ist gegenüber der in Fig. 8 dargestellten Aufnahmevorrichtung 705 um 90° zum Betrachter gedreht dargestellt. Zu erkennen ist in Fig. 9, dass durch die Aufnahmenut 505 zwei einander gegenüberliegende Fixierelemente 305 ausgefomrt werden, die gemäß diesem Beispiel im Querschnitt beispielhaft je die Form eines Kreisringsegments aufweisen. Zwei einander zugewandte Innenflächen der Fixierelemente 305 verlaufen gemäß diesem Beispiel parallel zueinander und bilden Nutinnenflächen die als Anschlagflächen für Seitenflächen der Zunge des Drehzahlsensors 100 dienen.

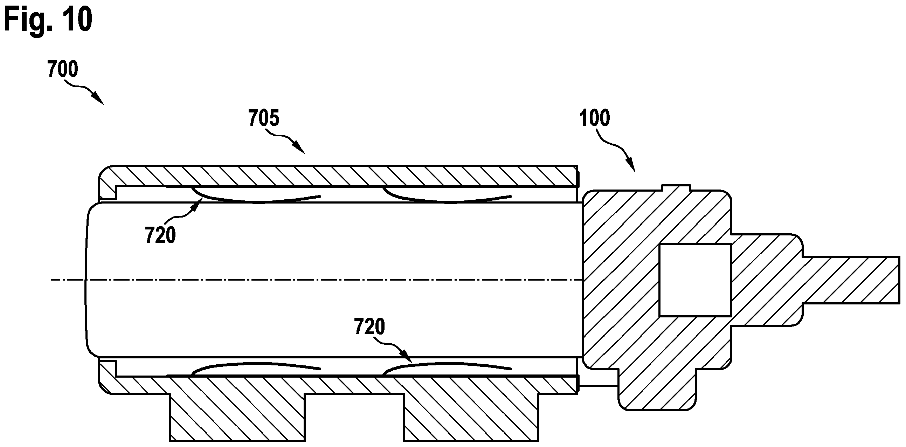

**Fig. 10** zeigt eine seitliche Querschnittdarstellung eines Sensorsystems 700. Dabei kann es sich um das in Fig. 7 beschriebene Sensorsystem 700 handeln, mit dem Unterschied, dass die Aufnahmevorrichtung 705 der in Fig. 8 oder 9 beschriebenen Aufnahmevorrichtung 705 entspricht. Der Drehzahlsensor 100 ist in der Aufnahmestellung in der Aufnahmevorrichtung 705 angeordnet und mittels der Fixiereinrichtung rotationssicher aber linear beweglich gelagert.

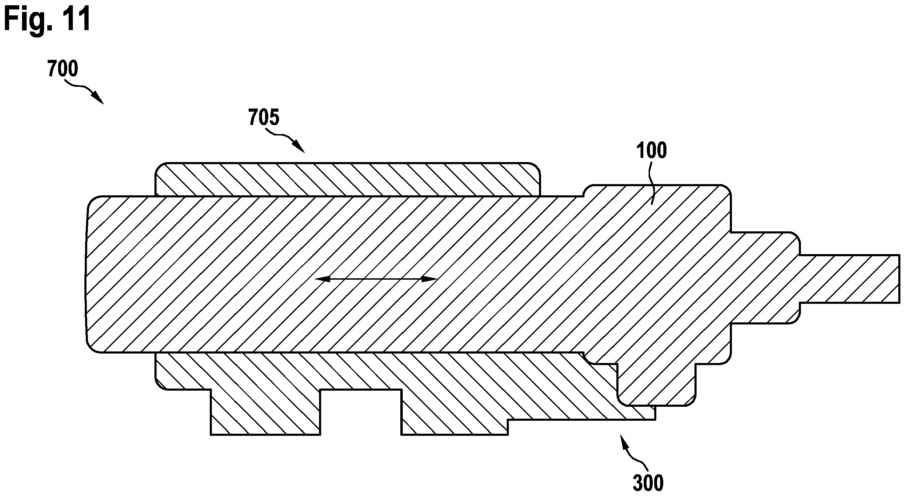

**Fig. 11** zeigt eine seitliche Querschnittdarstellung eines Sensorsystems 700. Dabei kann es sich um das in Fig. 10 beschriebene Sensorsystem 700 handeln. Der Drehzahlsensor 100 ist gemäß diesem Beispiel einstückig ausgeformt. Die Fixiereinrichtung 300 ist als Fortsatz der Aufnahmevorrichtung 705 ausgeformt.

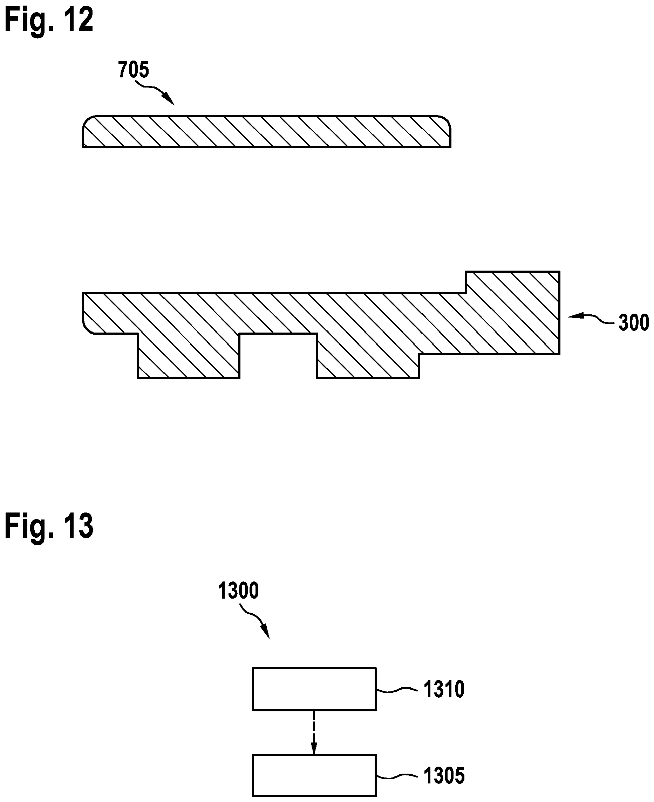

**Fig. 12** zeigt eine seitliche Querschnittdarstellung einer Aufnahmevorrichtung 705. Dabei kann es sich um die in Fig. 11 beschriebene Aufnahmevorrichtung 705 handeln. Bei der Fixiereinrichtung 300 kann es sich um eine der anhand einer der Figuren 3 bis 11 beschriebenen Fixiereinrichtungen 300 handeln, welche einstückig oder formschlüssig, stoffschlüssig und/oder kraftschlüssig mit dem Aufnahmekörper verbunden ist.

**Fig. 13** zeigt ein Ablaufdiagramm eines Verfahrens 1300 zum verdrehsicheren Positionieren eines Drehzahlsensors an einer Fixiereinrichtung gemäß dem Ausführungsbeispiel nach Fig. 3b. Das Verfahren 1300 weist einen Schritt 1305 des Anordnens auf, in dem die Zunge des Drehzahlsensors in oder an eine Gegenkontur einer Fixiereinrichtung angeordnet wird, wobei die Zunge im Schritt 1305 des Anordnens derart angeordnet wird, dass sie mit der Gegenkonutr zusammenwirkt, also beispielsweise in oder an die Gegenkontur greift, um den Drehzahlsensor verdrehsicher zu positionieren.

Optional weist das Verfahren 1300 einen Schritt 1310 des Bereitstellens vor dem Schritt 1305 des Anordnens auf, wobei im Schritt 1310 des Bereitstellens der Drehzahlsensor und die Fixiereinrichtung bereitgestellt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Drehzahlsensor
- 105: Sensorkopf
- 110: Messspitze
- 115: Zunge
- 120: Außendurchmesser
- 125: Rotor
- 130: erstes Bauteil
- 135: zweites Bauteil
- 140: Zylindermittelachse
- 145: Richtungsindikator
- 150: Kabelabgang

- 200: Seitenfläche
- 205: Endfläche
- 210: Schlüsselflächen

- 300: Fixiereinrichtung
- 305: Fixierelement
- 310: weiterer Richtungsindikator

- 400: Zungennut

- 500: Lagerkörper
- 505: Aufnahmenut
- 510: Nutinnenfläche
- 515: Bohrungen

- 615: Befestigungselement

- 700: Sensorsystem
- 705: Aufnahmevorrichtung
- 710: Aufnahmekörper
- 711: Aufnahmebohrung
- 712: Rasteinrichtung
- 715: Aufnahmestellung
- 720: Klemmhülse

- 800: Lasche

- 1300: Verfahrens zum verdrehsicheren Positionieren eines Drehzahlsensors an einer Fixiereinrichtung
- 1305: Schritt des Anordnens
- 1310: Schritt des Bereitstellens

## Patentansprüche

1. Sensorsystem (700) mit einer Aufnahmevorrichtung (705), die einen Aufnahmekörper (710) zum Aufnehmen zumindest eines Abschnitts eines Sensorkopfs (105) eines Drehzahlsensors (100) und eine Fixiereinrichtung (300, 305) aufweist, und mit dem Drehzahlsensor (100) mit den folgenden Merkmalen:
dem zylindrischen Sensorkopf (105) mit einer Messspitze (110); und
einer Zunge (115), die an einem Außendurchmesser (120) des Sensorkopfs (105) angeordnet ist und dazu ausgeformt ist, um als Verdrehsicherung für den Drehzahlsensor (100) mit einer Gegenkontur der Fixiereinrichtung (300, 305) zusammenzuwirken, wobei die Zunge (115) des Drehzahlsensors (100) mit der Gegenkontur verdrehsicher gekoppelt oder koppelbar ist,
**dadurch gekennzeichnet, dass**
eine Endfläche (205) der Zunge (115) eine plane Anschlagfläche für die Gegenkontur (300) ausformt, wobei die Endfläche (205) ein äußerstes freies Ende der Zunge (115) ausformt und quer zu Seitenflächen (200) der Zunge (115) verlaufend angeordnet ist und diese verbindet, wobei die plane Anschlagfläche als einzige Fläche zur Verdrehsicherung dient.

2. Sensorsystem (700) gemäß Anspruch 1, bei dem die Zunge (115) dazu ausgeformt ist, an die Gegenkontur der Fixiereinrichtung (300, 305) zu greifen.

3. Sensorsystem (700) gemäß einem der vorangegangenen Ansprüche, bei dem sich die Zunge (115) radial von dem Sensorkopf (105) weg erstreckt.

4. Sensorsystem (700) gemäß einem der vorangegangenen Ansprüche, bei dem die Zunge (115) an einem der Messspitze (110) abgewandten Ende des Sensorkopfs (105) angeordnet ist.

5. Sensorsystem (700) gemäß einem der vorangegangenen Ansprüche, bei dem die Gegenkontur zumindest einen Fortsatz als Gegenanschlagfläche für die Zunge (115) ausformt.

6. Sensorsystem (700) gemäß einem der vorangegangenen Ansprüche, bei der der Aufnahmekörper (710) und die Fixiereinrichtung (300, 305) einstückig ausgeformt sind oder die Fixiereinrichtung (300, 305) formschlüssig, kraftschlüssig und/oder stoffschlüssig mit dem Aufnahmekörper (710) verbunden ist.

7. Verfahren (1300) zum verdrehsicheren Positionieren eines Drehzahlsensors (100) eines Sensorsystems (700) gemäß einem der Ansprüche 1 bis 6 an der Fixiereinrichtung (300, 305), wobei das Verfahren (1300) den folgenden Schritt umfasst:
Anordnen (1305) der Zunge (115) des Drehzahlsensors (100) in oder an die Gegenkontur der Fixiereinrichtung (300, 305),
**dadurch gekennzeichnet, dass**
eine Endfläche (205) der Zunge (115) eine plane Anschlagfläche für die Gegenkontur (300) ausformt, wobei die Zunge (115) im Schritt (1300) des Anordnens derart angeordnet wird, dass sie mit der Gegenkontur zusammenwirkt, um den Drehzahlsensor (100) verdrehsicher zu positionieren, wobei die plane Anschlagfläche als einzige Fläche zur Verdrehsicherung dient.

## Claims

1. Sensor system with a receiving device (705) with a receiving body (710) for receiving at least one section of a sensor head (105) of a rotational speed sensor (100) and a fixing device (300, 305), and with the rotational speed sensor (100) with the following features:
the cylindrical sensor head (105) with a measuring tip (110); and
a tongue (115) which is arranged on an external diameter (120) of the sensor head (105), and which is formed to interact with a counter contour of the fixing device (300, 305) as a rotational lock for the rotational speed sensor (100), wherein the tongue (115) of the rotational speed sensor (100) is or can be coupled to the counter contour in a rotationally locked manner
**characterized in that**
and end surface (205) of the tongue (115) forms a flat stop surface for the counter contour (300), wherein the end surface (205) forms an outermost free end of the tongue (115) and is arranged to run transversely to the side surfaces (200) of the tongue (115) and connects them, wherein the flat stop surface serves as a single surface for rotationally fixed locking.

2. Sensor system (700) according to Claim 1, in which the tongue (115) is formed to grip the counter contour of the fixing device (300, 305).

3. Sensor system (700) according to any one of the previous claims, in which the tongue (115) extends radially away from the sensor head (105).

4. Sensor system (700) according to any one of the previous claims, in which the tongue (115) is arranged on an end of the sensor head (105) facing away from the measuring tip (110).

5. Sensor system (700) according to any one of the previous claims, in which the counter contour forms at least one protrusion as a counter stop surface for the tongue (115).

6. Sensor system (700) according to any one of the previous claims, in which the receiving body (205) and the fixing device (300, 305) are formed in one piece, or the fixing device (300, 305) is connected to the receiving body (710) in a form-fitting, force-fitting and/or bonding manner.

7. Method (1300) for rotationally locked positioning of a rotational speed sensor (100) of a sensor system (700) according to any one of Claims 1 to 6 on the fixing device (300, 305), wherein the method (1300) includes the following step:
arranging (1305) the tongue (115) of the rotational speed sensor (100) in or on the counter contour of the fixing device (300, 305),
**characterized in that**
an end surface (205) of the tongue (115) forms a flat stop surface for the counter contour (300), wherein in the arranging step (1300) the tongue (115) is arranged in such a way that it interacts with a counter contour to position the rotational speed sensor (100) in a rotationally locked manner, wherein the flat stop surface serves as a single surface for rotationally locked positioning.

## Revendications

1. Système (700) capteur comprenant un dispositif (705) de réception, qui a un corps (710) de réception pour la réception d'au moins une partie d'une tête (105) d'un capteur (100) de vitesse de rotation, et un dispositif (300, 305) de fixation, et comprenant le capteur (100) de vitesse de rotation ayant les caractéristiques suivantes :
la tête (105) cylindrique du capteur ayant une pointe (110) de mesure ; et
une languette (115), qui est disposée sur un diamètre (120) extérieur de la tête (105) du capteur et qui est conformée pour coopérer, comme sécurité vis-à-vis de la rotation pour le capteur (100) de vitesse de rotation, avec un contour antagoniste du dispositif (300, 305) de fixation, dans lequel la languette (115) du capteur (100) de vitesse de rotation est accouplée, sans possibilité de tourner, au contour antagoniste ou peut l'être,
**caractérisé en ce que**
une surface (205) d'extrémité de la languette (115) forme une surface plane de butée pour le contour (300) antagoniste, dans lequel la surface (205) d'extrémité forme une extrémité libre, la plus à l'extérieur de la languette (115) et est disposée, en s'étendant transversalement à des surfaces (200) latérales de la languette (115) et relie celles-ci, dans lequel la surface plane de butée sert de surface unique comme sécurité vis-à-vis de la rotation.

2. Système (700) capteur suivant la revendication 1, dans lequel la languette (115) est conformée pour prendre le contour antagoniste du dispositif (300, 305) de fixation.

3. Système (700) capteur suivant l'une des revendications précédentes, dans lequel la languette (115) s'étend en s'éloignant radialement de la tête (105) du capteur.

4. Système (700) capteur suivant l'une des revendications précédentes, dans lequel la languette (115) est disposée à une extrémité, non tournée vers la pointe (110) de mesure, de la tête (105) du capteur.

5. Système (700) capteur suivant l'une des revendications précédentes, dans lequel le contour antagoniste forme au moins un prolongement comme surface de butée antagoniste pour la languette (115) .

6. Système (700) capteur suivant l'une des revendications précédentes, dans lequel le corps (710) de réception et le dispositif (300, 305) de fixation sont conformés en une seule pièce ou le dispositif (300, 305) de fixation est assemblé à complémentarité de forme, à coopération de force et/ou à coopération de matière avec le corps (710) de réception.

7. Procédé (1300) de mise en position sans possibilité de tourner d'un capteur (100) de vitesse de rotation d'un système (700) capteur suivant l'une des revendications 1 à 6 sur le dispositif (300, 305) de fixation, le procédé (1300) comprenant le stade suivant
mise (1305) de la languette (115) du capteur (100) de vitesse de rotation dans ou sur le contour antagoniste du dispositif (300, 305) de fixation,
**caractérisé en ce qu'**
une surface (205) d'extrémité de la languette (115) forme une surface plane de butée pour le contour (300) antagoniste, dans lequel la languette (115) est disposée au stade (1300) où elle est mise de manière à ce qu'elle coopère avec le contour antagoniste, pour mettre le capteur (100) de vitesse de rotation en position sans possibilité de tourner, la surface plane de butée servant de surface unique pour la sécurité vis-à-vis de la rotation.
